# FASCICULE DE BREVET EUROPEEN

(11) **EP 1 305 704 B1**
(45) Date de publication et mention de la délivrance du brevet: **24.02.2010**
(21) Numéro de dépôt: 01960846.2
(22) Date de dépôt: 30.07.2001
(51) Int. Cl.: G06F 3/033

(54) **DISPOSITIF DE COMMANDE D'UN SYSTEME INFORMATIQUE**
VORRICHTUNG ZUR STEUERUNG EINES INFORMATIONSYSTEMS
DEVICE FOR CONTROLLING A COMPUTER SYSTEM

(30) Priorité: 31.07.2000 MC 2453
(43) Date de publication de la demande: 02.05.2003
(73) Titulaire: Popineau, Gérard, 94300 Vincennes (FR)
(72) Inventeur: Popineau, Gérard, 94300 Vincennes (FR)
(86) Numéro de dépôt international: PCT/FR2001/002490
(87) Numéro de publication internationale: WO 2002/010897

(56) Documents cités:
- EP-A- 0 907 141
- JP-A- 8 221 194
- JP-A- 9 146 703
- US-A- 5 900 869
- US-A- 6 025 942
- PATENT ABSTRACTS OF JAPAN vol. 1998, no. 06, 30 avril 1998 (1998-04-30) & JP 10 040002 A (NEC COMMUN SYST LTD), 13 février 1998 (1998-02-13) cité dans la demande

## Description

### DOMAINE TECHNIQUE DE L'INVENTION

La présente invention concerne un dispositif de commande d'un système informatique, préférentiellement de type "micro-ordinateur personnel", au moyen de dispositifs de pointage, notamment de type "souris sans fil".

### ARRIERE-PLAN TECHNOLOGIQUE DE L'INVENTION

Les dispositifs de commande d'un système informatique consistant à déplacer au moyen d'une "souris", "boule" ou autre dispositif de pointage, un curseur afin de désigner sur l'écran du système un objet, icône ou élément d'un menu, représentatif d'une fonction à exécuter, sont bien connus. S'ils étaient à l'origine réservés à des professionnels travaillant sur des consoles graphiques de haut de gamme, ils sont aujourd'hui le symbole de la démocratisation de l'usage de l'ordinateur en supprimant l'obligation d'avoir à apprendre des langages de commande ésotériques. Même un enfant ne sachant pas encore lire peut jouer avec un ordinateur muni d'une interface graphique.

Les fabricants de dispositifs de pointage ont donc cherché à rendre ceux-ci d'un usage le plus agréable possible. Une contrainte, généralement agaçante, est la présence du fil reliant la souris à l'unité centrale, et servant à la fois à la transmission des données en mode série et à l'alimentation électrique. Ce fil est toujours trop court ou s'accroche aux objets les plus divers. Une souris sans fil est donc considérée comme une amélioration.

Un tel dispositif de pointage est décrit dans la demande de brevet européen EP0171747, au nom de la société METAPHOR COMPUTER SYSTEMS, publiée le 19 février 1986. Le dispositif transmet ses déplacements et les états de ses boutons de commande à l'unité centrale au moyen d'un faisceau de lumière infrarouge modulée en amplitude par les séquences de signaux binaires représentatifs. La mise en oeuvre d'une transmission par infrarouge en bande de base est extrêmement simple, mais il peut apparaître des problèmes de réception liés à la lumière ambiante, qui peut présenter des composantes spectrales dans le proche infrarouge (Soleil, lampes à incandescence). Il a donc été recherché une amélioration de la réception en utilisant des moyens de concentration et de guidage de la lumière reçue.

La demande de brevet japonais JP4205129, au non de HITACHI LTD, publié le 27 juillet 1992, fait état d'un tel système.

Un autre problème technique est posé par l'alimentation électrique de la souris sans fil. La suppression de la contrainte du fil conduit à une autre servitude: l'obligation de recharger périodiquement la batterie avant que le dispositif ne cesse de fonctionner. La demande EP017747 apportait une réponse partielle à ce problème en transmettant à l'unité centrale un message d'alerte destiné à l'utilisateur.

La demande de brevet européen EP0849700, par les sociétés PHILIPS PATENTVERWALTUNG et PHILIPS ELECTRONICS, publiée le 24 juin 1998, propose une alimentation de la souris sans fil par une boucle inductive placée dans le tapis de la souris. Le fil de la souris est bien supprimé, mais le problème est déplacé au niveau de la fourniture d'énergie électrique sous la forme appropriée au tapis. Un nouveau fil est donc nécessaire; de plus l'utilisateur est limité dans ses choix esthétiques de cet accessoire, puisque le tapis est obligatoirement d'un modèle spécialement adapté au système.

L'alimentation électrique n'est pas une question se posant seulement pour les dispositifs de pointage d'ordinateur. Elle se pose pour tous les petits appareils électroniques. Généralement, des piles sont utilisées. Le remplacement périodique de celles-ci peut devenir onéreux pour l'utilisateur, et on utilise de plus en plus communément des batteries, au prix d'un investissement de départ plus important, notamment dans un chargeur. Pour des faibles puissances, une alimentation mixte par batterie et par cellule solaire, la batterie jouant un rôle de tampon, est connue depuis l'apparition sur le marché de cellules bon marché au silicium amorphe. C'est le cas des calculettes ou des calculateurs de bureau. Les dispositifs décrits dans les demandes de brevets japonais JP56132653 et JP61210828, respectivement au nom de la société SEIKO EPSON CORP et de la société CASIO COMPUTER CO LTD, constituent des exemples parmi d'autres.

L'application d'une alimentation électrique par cellule solaire à une souris sans fil mettant en oeuvre une liaison par infrarouge est décrite dans la demande de brevet britannique GB2292995, au nom de la société PRIMAX ELECTRONICS LTD, publiée le 13 mars 1996.

Les améliorations du dispositif de pointage de base largement connu dans le domaine de la micro-informatique, ne concernent que l'utilisation individuelle d'un système informatique. On connaît des possibilités de travail en coopération de plusieurs personnes par la mise en oeuvre de plusieurs unités centrales connectées en réseau. Mais, même si le travail est collectif, chaque personne commande personnellement chaque unité centrale au moyen de son propre dispositif de pointage.

Un système permettant à plusieurs personnes d'utiliser une même unité centrale est décrit dans les demandes de brevets japonais JP8221194 et JP9146703, au nom de la société NTT, publiées respectivement le 30 août 1996 et le 6 juin 1997. Les commandes provenant de plusieurs souris sans fil peuvent être reçues par un ordinateur personnel conventionnel. Dans ce but, une technique de transmission radio par partage de temps est mise en oeuvre. Les différentes souris transmettent successivement leurs données quand elles reçoivent un code d'identification envoyé par la station de base connectée à l'unité centrale correspondant à leurs propres codes. L'utilisation prévue est celle de l'éducation et du jeu.

La demande de brevet japonais JP10040002, au nom de la société NEC, publiée le 13 février 1998, décrit le fonctionnement simultané de plusieurs souris dans une même fenêtre.

Le concept d'un ensemble de dispositifs de pointage commandant un système informatique unique présente des perspectives intéressantes notamment dans l'enseignement. Contrairement à l'enseignement d'autres disciplines, l'informatique pratique se prête actuellement assez mal à des cours collectifs. La formation est plutôt basée sur la mise en place de séances de travaux pratiques, pendant lesquelles les élèves, par petits groupes de deux ou trois, s'exercent sur un micro-ordinateur complet. Pour permettre à un grand nombre d'élèves de bénéficier d'une initiation, il faut donc des moyens matériels considérables installés à demeure dans des salles de classes spécialisées, disposant de nombreuses prises d'alimentations électriques.

Les systèmes de souris sans fil décrits ci-dessus dans les documents de brevets JP9146703, JP8221194 et JP10040002, permettraient au contraire une approche plus traditionnelle de l'initiation au maniement d'un ordinateur. Chaque élève disposant d'une souris, pourrait, sous la conduite d'un formateur, apprendre à utiliser une interface graphique, dont l'image pourrait être projetée sur un écran de grandes dimensions au moyen d'un périphérique informatique approprié, tel qu'un projecteur vidéo, ou une tablette LCD adaptée à un rétroprojecteur.

L'avantage économique est évident: il suffit d'un seul système informatique, qui pourrait être constitué par un micro-ordinateur portable. Les salles spécialisées ne sont plus nécessaires, et l'équipement peut être installé rapidement dans tout local. Toutefois cet avantage économique est un peu limité par la complexité des systèmes connus. Les protocoles de transmission de données entre les souris et l'unité centrale font appel à des liaisons hertziennes qui contraignent les dispositifs de pointage à comporter chacun un récepteur pour recevoir des signaux de synchronisation. Les liaisons par ondes radioélectriques présentent aussi beaucoup d'inconvénients dans les pays où il existe des réglementations contraignantes en matière de bandes de fréquences utilisables pour la transmission de données. Le nombre de ces bandes est restreint et les bandes restantes sont extrêmement encombrées, obligeant l'emploi de méthodes de codage des données très complexes, pour éviter une perturbation par un système similaire fonctionnant à proximité.

Le recours à une liaison par infrarouge semblerait donc plus approprié, les canaux de communication par ce moyen à l'intérieur d'un local étant préservés des perturbations extérieures. De plus, le système pourrait mettre en oeuvre des composants électroniques ayant une très grande diffusion, puisque les télécommandes par infrarouge sont d'emploi universel.

Le système exige un nombre de canaux de communication au moins égal au nombre de dispositifs de pointage, et doit être insensible à la lumière ambiante, mais des techniques de modulation ayant les caractéristiques voulues existent. On peut citer les techniques de modulation par saut de fréquence d'une sous-porteuse, dont un exemple est donné dans la demande de brevet européen EP0342146, au nom de la société TRANSDATA, publiée le 11 mai 1989. Le dispositif décrit concerne une seule liaison bidirectionnelle entre un compteur électrique et un appareil destiné à relever la consommation d'électricité, et la méthode mise en oeuvre ne pourrait donc pas être directement appliquée. Toutefois, la méthode de démodulation décrite dans ce document, faisant appel à une électronique câblée, peut être remplacée aisément par un traitement par logiciel équivalent.

La demande européenne EP0924873, au nom de la société ALCATEL, publiée le 23 juin 1999, décrit un algorithme permettant de détecter la tonalité de réponse pour des modems et des télécopieurs.

Ce type d'algorithme, de type "Goertzel", est bien connu, et peut s'appliquer à la détection de fréquences vocales. La puissance de calcul importante nécessaire implique l'utilisation de circuits de traitement numérique du signal spécialisés, comme ceux fabriqués par la société ADVANCED MICRO DEVICES. Cette société divulgue d'ailleurs une amélioration de l'algorithme de Goertzel dans la demande de brevet internationale WO97/20438, publiée le 5 juin 1997. Dans la note technique "DTMF Tone Generation and Detection: An implementation Using the TMS320C54x" (Application Report; SPRA096A- May 2000), la société TEXAS INSTRUMENTS, décrit les algorithmes pour effectuer la synthèse et la détection des signaux d'un système multifréquentiel.

Le document US-A-5900869 décrit un système informatique commun à plusieurs utilisateurs, utilisant une pluralité de souris pour commander des pointeurs respectifs affichés à l'écran. La possibilité de connexions infrarouges est évoquée, mais le document ne décrit aucune technique particulière pour sa mise en oeuvre.

Il ressort de l'état de la technique tel que décrit dans les documents cités ci-dessus, que des ensembles de dispositifs de pointage destinés à un groupe d'utilisateurs pour commander un système informatique commun sont connus, mais qu'il n'existe à ce jour aucun système simple, robuste, bon marché, faisant appel à des techniques éprouvées et modernes, qui puisse réellement être mis en oeuvre notamment à des fins d'enseignement en réalisant une synthèse inventive de l'état de la technique en vue d'obtenir des caractéristiques optimales.

### DESCRIPTION GENERALE DE L'INVENTION

La présente invention vise donc à optimiser la conception d'un dispositif de commande d'un système informatique.

Elle a précisément pour objet un dispositif de commande d'un système informatique, préférentiellement de type "micro-ordinateur personnel", muni, de façon connue, d'une interface graphique, et d'au moins un port de communication, par un groupe d'utilisateurs au moyen de plusieurs dispositifs de pointage sans liaison filaire avec le système, préférentiellement de type "souris sans fil". Chacun des dispositifs de pointage est manipulé par chacun des utilisateurs et transmet au moyen d'un canal de communication des séquences de données binaires représentatives des déplacements et des états de ces dispositifs de pointage à un boîtier électronique d'interface connecté au port de communication.

Le dispositif de commande d'un système informatique objet de la présente invention est remarquable en ce que le canal de communication comporte une pluralité de sous-canaux de communication, transmettant avec une rapidité de modulation standard les séquences de données binaires, constitués par une porteuse infrarouge commune et un ensemble de sous-porteuses modulées en amplitude par les signaux binaires de ces séquences. Les fréquences des sous-porteuses sont différentes pour chacun des dispositifs de pointage, sans harmonique commun, et sont réparties entre une fréquence inférieure et une fréquence supérieure, avec des intervalles au moins égaux au double de la valeur de la rapidité de modulation augmentée d'une bande de garde.

De façon avantageuse, les fréquences des sous-porteuses sont égales à des nombres premiers multipliés par un coefficient constant.

Dans un premier mode de réalisation de l'invention, une seule sous-porteuse est affectée à chacun des dispositifs de pointage.

Dans un second mode de réalisation, on affecte à chacun des dispositifs de pointage deux sous-porteuses modulées en opposition de phase par les signaux binaires des séquences.

Dans le premier mode de réalisation de l'invention, le système de commande met en oeuvre des dispositifs de pointage qui comportent chacun:
a) un bloc de traitement numérique des signaux comprenant un préférentiellement microcontrôleur élaborant les signaux binaires
b) un bloc d'émission comprenant:
   - un oscillateur, préférentiellement à résonateur céramique interchangeable, accordé sur l'harmonique N de la fréquence de la sous-porteuse affectée au dispositif de pointage
   - un diviseur de fréquence par N produisant la sous-porteuse à partir de son harmonique
   - un modulateur de la sous-porteuse par les signaux binaires produisant des signaux modulés
   - un filtre passe-bande de fréquence centrale égale à celle de la sous-porteuse et de bande passante égale à l'intervalle de fréquence diminué de la bande de garde, générant des signaux filtrés à partir des signaux modulés.
   - un amplificateur alimentant une ou plusieurs diodes émettant un faisceau de lumière infrarouge à partir des signaux filtrés.
c) un bloc d'alimentation comprenant:
   - une cellule solaire
   - une batterie
   - un régulateur de charge de la batterie par la cellule solaire
   - un convertisseur DC/DC

Dans le second mode de réalisation de l'invention, le système de commande met en oeuvre des dispositifs de pointage qui comportent chacun:
a) un bloc de traitement numérique des signaux comprenant préférentiellement un microcontrôleur muni:
   - d'un premier programme élaborant les signaux binaires
   - d'un second programme constituant un oscillateur digital élaborant les échantillons des sous-porteuses modulées.
b) un bloc d'émission comprenant:
   - un convertisseur numérique/analogique de conversion des sous-porteuses échantillonnées
   - un filtre passe-bande de fréquence centrale égale à celle de la sous-porteuse et de bande passante égale à l'intervalle de fréquence diminué de la bande de garde, générant des signaux filtrés à partir des signaux modulés.
   - un amplificateur alimentant une ou plusieurs diodes émettant un faisceau de lumière infrarouge à partir des signaux filtrés.
c) un bloc d'alimentation comprenant:
   - une cellule solaire
   - une batterie
   - un régulateur de charge de la batterie par la cellule solaire
   - un convertisseur DC/DC.

Une caractéristique additionnelle du premier mode de réalisation est que le boîtier électronique comporte:
a) un bloc de réception des signaux de lumière infrarouge et de détection des sous-porteuses.
b) un bloc de démultiplexage fréquentiel des signaux détectés comprenant un nombre de filtres analogiques passe-bande égal au nombre de dispositifs de pointage.
c) un bloc de traitement numérique des signaux comprenant préférentiellement un microprocesseur muni d'un programme de communication élaborant les signaux binaires à partir des signaux démultiplexés et les transmettant au port de communication au moyen d'un amplificateur de ligne.

Une caractéristique additionnelle du second mode de réalisation, qui constitue également une variante du premier mode, est que le boîtier électronique comporte:
a) un bloc de réception des signaux de lumière infrarouge et de détection des sous-porteuses.
b) un bloc de traitement numérique des signaux comprenant:
   - un convertisseur analogique/ numérique des signaux détectés
   - un microprocesseur ou analogue muni d'un algorithme d'extraction de l'information spectrale des signaux détectés par "Transformation de Fourier Discrète", préférentiellement un filtre digital à deux pôles à réponse impulsionnelle infinie de type "Goertzel", et d'un programme de communication élaborant les signaux binaires à partir de cette information et les transmettant au port de communication au moyen d'un amplificateur de ligne.

Dans l'un ou l'autre des modes de réalisation décrits ci-dessus, l'amplificateur de ligne est bidirectionnel et transmet au microprocesseur ou analogue des séquences de données binaires représentatives des déplacements d'un dispositif de pointage supplémentaire.

Fort avantageusement, le boîtier électronique du dispositif de commande d'un système informatique selon l'invention comporte une partie distincte comprenant le bloc de réception, munie d'un cornet collecteur des faisceaux de lumière infrarouge, et reliée par un câble blindé à la partie principale connectée au port de communication.

Concourant aux buts de l'invention, le boîtier électronique comporte une partie principale en forme de console munie de commutateurs permettant de sélectionner un ou plusieurs dispositifs de pointage et de rendre inopérants les autres.

Avantageusement, les signaux binaires émis par chacun des dispositifs de pointage transmettent de plus périodiquement des séquences de données binaires de signalisation de ces dispositifs de sorte qu'une alarme est déclenchée quand l'une quelconque de ces séquences n'est plus reçue après un délai prédéterminé par le boîtier électronique.

Selon l'invention les signaux binaires transmettent de plus des séquences de données binaires caractéristiques de l'intégrité de chacun des dispositifs de pointage, préférentiellement de la présence de la boule dans le type " souris sans fil ".

Il est aussi avantageux que chacun des dispositifs de pointage comporte de plus des boutons-poussoirs en nombre au moins égal à 2, préférentiellement 7, dont les séquences de données binaires représentatives de leurs états sont incluses dans lesdits signaux binaires.

On tirera un grand bénéfice de l'utilisation du dispositif de commande selon l'invention notamment pour un système informatique comportant:
- une unité centrale préférentiellement de type "ordinateur portable"
- un périphérique d'affichage préférentiellement de type "tablette LCD" adaptable à un rétroprojecteur, ou un vidéo-projecteur portable
- un ensemble de logiciels d'application de type "bureautique", de communication, ou spécifiques d'une fonction ou d'un métier
et quand cette utilisation est l'initiation collective à la micro-informatique et la formation collective à l'usage de ces logiciels.

On tirera également bénéfice de l'utilisation du dispositif de commande selon l'invention avec le même matériel supportant un ensemble de logiciels d'application de type " présentation assistée par ordinateur ", quand il s'agit préférentiellement de présentation commerciale permettant à un individu d'un groupe de clients de choisir un produit ou service au moyen des dispositifs de pointage, et de visualiser des informations sur ce produit ou service.

Une autre utilisation avantageuse du dispositif de commande d'un système informatique selon l'invention avec la configuration ci-dessus met en oeuvre un ensemble de logiciels d'application de type " enseignement assisté par ordinateur ". Cette utilisation est préférentiellement la passation collective de questionnaires à choix multiples dont les réponses sont sélectionnées aux moyens des boutons-poussoirs des dispositifs de pointage.

De préférence, le système informatique, les dispositifs de pointage, et le boîtier électronique sont placés sur un chariot tenu à la disposition des utilisateurs, qu'ils soient formateurs, présentateurs ou enseignants, pour être emmenés et utilisés dans des locaux ne présentant pas de câblage électrique spécial.

Les avantages de ces différentes utilisations sont encore accrus quand le système informatique comporte de plus un logiciel de simulation d'un clavier permettant de simuler le frappe d'une touche en désignant l'image simulée de cette touche au moyen de l'un des dispositifs de pointage.

Les utilisateurs apprécient l'usage du dispositif selon l'invention quand le système informatique comporte de plus un logiciel attribuant un curseur de forme et/ou de couleur différentes à chacun des dispositifs de pointage selon les séquences de données binaires d'identification des dispositifs de pointage émetteurs incluses dans les signaux par le programme de communication avec le boîtier électronique.

Ces quelques spécifications essentielles, résultant de la conception optimale du dispositif de commande d'un système informatique, rendent évidents pour l'homme de métier les avantages apportés par l'invention par rapport à l'état de la technique antérieure.

### BREVE DESCRIPTION DES DESSINS

La Figure 1 est un schéma du dispositif de commande d'un système informatique par un groupe d'utilisateurs selon le concept général connu de l'état de la technique.
La Figure 2 est un schéma explicatif de la méthode de multiplexage fréquentiel mis en oeuvre dans le dispositif de commande d'un système informatique selon l'invention.
La Figure 3 est un schéma électronique simplifié de chacun des dispositifs de pointage du dispositif de commande selon un premier mode de réalisation de l'invention.
La Figure 4 est un schéma électronique simplifié du boîtier électronique du dispositif de commande selon un premier mode de réalisation de l'invention.
La Figure 5 est un schéma électronique simplifié de chacun des dispositifs de pointage du dispositif de commande selon un second mode de réalisation de l'invention.
La Figure 6 est un schéma électronique simplifié du boîtier électronique du dispositif de commande selon un second mode de réalisation de l'invention.
La Figure 7 est une vue générale schématique du boîtier électronique du dispositif de commande d'un système informatique selon l'invention.
La Figure 8 est une vue schématique du cornet collecteur que comporte le boîtier électronique.
La Figure 9 est une vue générale d'un système informatique utilisant le dispositif de commande selon l'invention.
La Figure 10 est une vue générale présentant une utilisation préférentielle du système informatique de la Figure 9.

### DESCRIPTION DE FORMES D'EXECUTION PREFEREES DE L'INVENTION

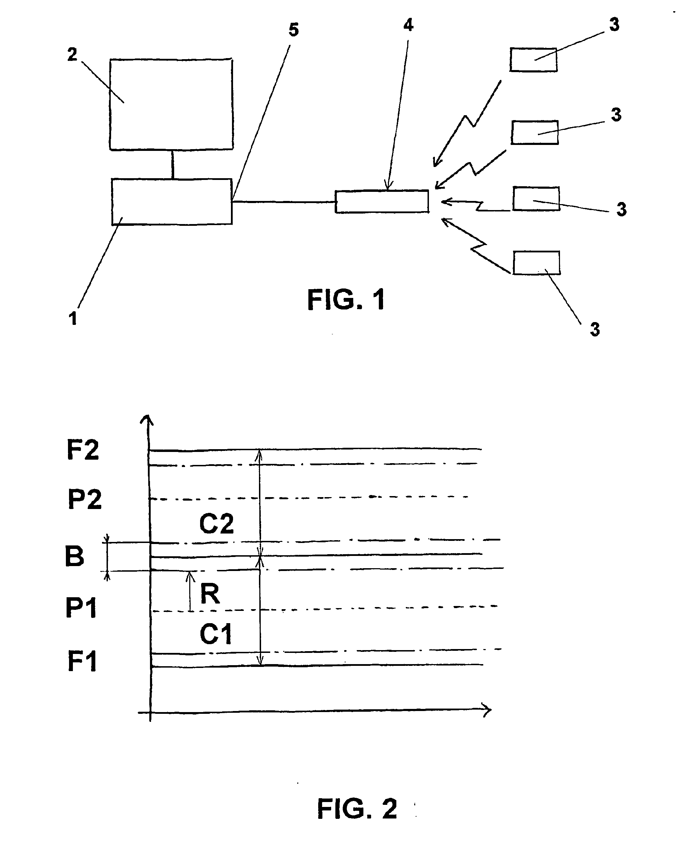

Les références aux Figures 1 à 10 serviront à expliquer en détails les différentes caractéristiques de l'invention.

Le concept général du dispositif est illustré par la Figure 1. Un micro-ordinateur 1 comporte un système d'exploitation présentant une interface graphique qui permet à des utilisateurs d'interagir avec le système au moyen d'un écran de visualisation 2 et de dispositifs de pointage 3. Les signaux émis par les dispositifs de pointage 3 sont reçus par un boîtier électronique 4 relié à un port de communication 5, généralement série, de l'unité centrale 1.

Dans un système de micro-ordinateur commun sous WINDOWS ®, les dispositifs de pointage sont des "souris", ou des "boules" qui communiquent leurs déplacements et les actions de l'utilisateur sur leurs boutons de contrôle (clics) au système d'exploitation par une liaison RS232. Pour les souris compatibles MICROSOFT ®, les déplacements X et Y, et l'état des boutons droit R et gauche L sont codés dans trois mots comportant 1 bit de START, 7 bits de données, et 2 bits de STOP, transmis à 1200 bauds. Pour être compatible avec tout système sous WINDOWS ® en émulant une souris compatible, le boîtier électronique 4 possède donc un mode de fonctionnement dans lequel les séquences de données binaires émanant de toutes les souris sont transmises avec ce format et à cette vitesse au port de communication série 5.

Dans un premier mode de réalisation du dispositif selon l'invention, tous les éléments d'une souris standard sont repris afin de réaliser des économies d'échelle. Pour chacune de ces souris, il s'agit donc de transmettre par infrarouge un ensemble de séquences de données binaires présentant une rapidité de modulation de 1200 bauds. Le nombre total de souris a été choisi égal à 32, à la fois pour des raisons pratiques (C'est l'effectif d'une classe) et techniques (Nombre de bits des ports et des bus des microprocesseurs utilisés).

Dans un second mode de réalisation, ne faisant plus appel à des éléments standards, où la plupart des fonctions électroniques sont réalisées par le traitement numérique des signaux, une rapidité de modulation de 1200 bauds sera cependant conservée pour des raisons de compatibilité. La technique de transmission de données par infrarouge choisie est une technique de multiplexage fréquentiel, dans une bande de fréquence limitée inférieurement et supérieurement, soit par les caractéristiques des filtres passe-bande utilisés dans le premier mode de réalisation, soit par le nombre de MIPS nominal des microprocesseurs mis en oeuvre dans le second mode de réalisation.

Dans la réalisation en électronique analogique, une seule sous-porteuse modulée en amplitude est affectée à chaque souris afin de limiter la complexité du boîtier électronique 4.

La réalisation entièrement numérique, permet l'utilisation d'un plus grand nombre de filtres pour le démultiplexage sans augmentation de la complexité. Deux sous-porteuses sont affectées à chaque souris. Les deux sous-porteuses sont modulées en opposition de phase par les signaux binaires des trames de bits émanant des capteurs de la souris, c'est-à-dire qu'il s'agit en fait d'une modulation par saut de fréquence (FSK) augmentant considérablement le rapport S/B de la transmission.

La Figure 2 montre la répartition des fréquences des sous-porteuses P1, P2 entre une fréquence inférieure F1 et une fréquence supérieure F2. Pour satisfaire au critère de Nyquist la bande de fréquence allouée à chaque dispositif de pointage est au moins de 2400 Hz; l'intervalle C1, C2 entre chaque sous-porteuse P1, P2 est donc au moins de 2400 Hz.

Les filtres passe-bande utilisés dans le premier mode de réalisation sont des décodeurs de tonalités, par exemple de type "LM567" de la société NATIONAL SEMICONDUCTOR. Pour ce circuit, la bande passante ΔF maximale est liée à la fréquence centrale F0 par la relation: ΔF = F0/ 0,14. La fréquence inférieure F1 doit donc être supérieure à 17 KHz.

Pour éviter que les sous-porteuses aient des harmoniques communs, leurs fréquences sont égales à des nombres premiers multipliés par un coefficient constant. Le tableau suivant donne des exemples de fréquences utilisées pour les 32 sous-canaux de transmission dans ce mode de réalisation.

| Canal | Nombre premier | Fréquence sous-porteuse (Hz) | Fréquence horloge (Hz) |
|---|---|---|---|
| 1 | 113 | 22600 | 180800 |
| 2 | 139 | 27800 | 222400 |
| 3 | 157 | 31400 | 251200 |
| 4 | 173 | 34600 | 276800 |
| | | | |
| | | | |
| 30 | 617 | 123400 | 987200 |
| 31 | 631 | 126200 | 1009600 |
| 32 | 647 | 129400 | 1035200 |

Le coefficient constant est égal à 200.

L'intervalle C1,C2 entre les fréquences des sous-porteuses P1, P2 est environ de 3KHz, ce qui ménage une bande de garde B acceptable.. La limite inférieure F1 du canal de communication est F1=19600 Hz, la limite supérieure est F2=130900 Hz.

Dans le second mode de réalisation, faisant appel à des oscillateurs numériques, il n'y a plus de contraintes sur F1 et F2, et la bande de garde pourrait être plus petite. Pour des raisons de compatibilité, la même répartition de fréquences a été gardée. Il y a donc 64 fréquences à un intervalle de 3KHz à partir de 22600 Hz.

Le tableau ci-dessus fait état d'une fréquence horloge.

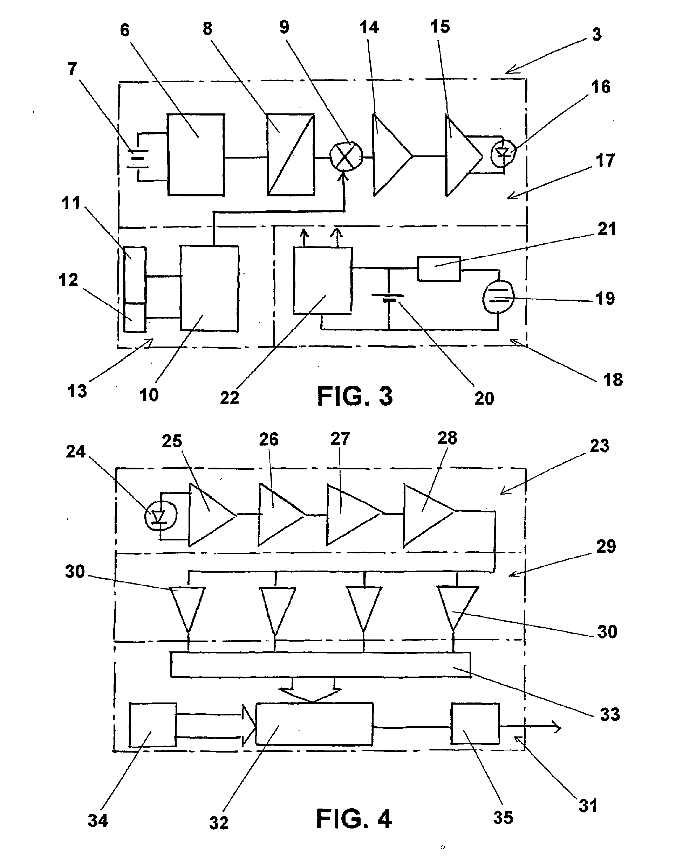

Comme le montre la Figure 3, chaque sous-porteuse P1, P2 est en effet produite par des moyens analogiques à partir de son huitième harmonique.

Un oscillateur 6 stabilisé par un résonateur céramique 7 génère un signal carré dont la fréquence est divisée par huit par un compteur binaire 8. Les résonateurs céramiques utilisés sont des résonateurs de marque CERALOCK ® ayant une gamme de fréquences et une précision appropriées.

Le signal carré à la fréquence de la sous-porteuse P1,P2 est commuté 9 par les signaux binaires provenant d'un microcontrôleur 10 traitant les signaux issus du capteur de déplacement 11 du dispositif de pointage 3, et des boutons 12.

Le microcontrôleur 10 et les capteurs 11,12 forment un bloc de traitement numérique des signaux 13 qui est préférentiellement un ensemble électronique de souris standard. Par exemple le microcontrôleur de type "COP800" de la société NATIONAL SEMICONDUCTOR a été utilisé.

Les signaux carrés modulés sont filtrés par un filtre passe-bande 14 dont la fréquence centrale est celle de la sous-porteuse P1,P2 et de bande passante égale à 2400 Hz. Le signal résultant est appliqué à un amplificateur 15 qui attaque une diode émettant dans l'infrarouge 16. La diode utilisée est une diode de référence SFH415-T, de la société SIEMENS, dont la puissance d'émission à 950 nm est comprise entre 25 et 50 mW par stéradian.

L'ensemble comprenant l'oscillateur 6, le diviseur 8, le filtre, 14, l'amplificateur 15 et la diode infrarouge 16 constitue un bloc d'émission 17 qui est préférentiellement rapporté à un élément de base de souris standard 13.

Le bloc d'alimentation 18 est un autre élément important du dispositif de pointage. Il comprend une cellule solaire 19 chargeant une batterie 20 par l'intermédiaire d'un régulateur 21. Les différentes tensions nécessaires aux circuits sont élaborées par un convertisseur DC/DC 22 à partir de la tension de la batterie 20.

La Figure 4 montre schématiquement le récepteur des signaux transmis par les dispositifs de pointage selon le premier mode de réalisation de l'invention.

Le bloc de réception 23 comprend une photodiode 24 recevant les faisceaux émis par les dispositifs de pointage 3 couplée en courant alternatif à l'entrée d'un amplificateur de courant 25. Cet amplificateur 25 est suivi d'un deuxième étage 26, et de deux filtres 27, 28 de réjection des composantes à 50 Hz et à 100 Hz pouvant être présentes dans le signal (ou bien à 60 Hz et 120 Hz, selon la localisation).

Les caractéristiques spectrales de la photodiode 24 sont adaptées à celles de la lumière émise. Une photodiode 24 de type BPW34-F, de la société SIEMENS, présentant un maximum de sensibilité à 950 nm et munie d'un filtre de lumière ambiante est utilisée. Les amplificateurs 25, 26 sont des circuits de type "LM13700" de la société NATIONAL SEMICONDUCTOR qui comportent deux amplificateurs de transconductance configurables en amplificateurs à contrôle automatique de gain (CAG).

Les signaux amplifiés sont transmis à un bloc de démultiplexage 29 constitué par une batterie de décodeurs de tonalité 30 qui produisent chacun un signal logique 0 quand un signal a une fréquence comprise dans leurs bandes passantes respectives.

Les signaux logiques sont traités au niveau d'un bloc de traitement numérique 31 par un microprocesseur 32 dont l'un des ports parallèles accède à ces signaux logiques mémorisés par un ensemble de bascules à sorties 3-états 33. Le programme du microprocesseur 32 prend en compte les données de registres 34, représentatives d'une sélection de dispositifs de pointage et d'un mode de fonctionnement, pour élaborer les signaux binaires transmis au moyen d'un amplificateur de ligne 35 au port de communication 5 de l'unité centrale 1. L'amplificateur de ligne 35 étant bidirectionnel, le microprocesseur reçoit également des trames de données émises par l'unité centrale 1, notamment son dispositif de pointage interne ("boule" ou autre), ou une souris supplémentaire connectée à un port auxiliaire du boîtier 4.

Les composants utilisés sont des circuits logiques d'usage courant. A titre d'exemple non limitatif, les circuits suivants ont été employés:
- microprocesseur 32: MC68705P3 de la société MOTOROLA
- bascules 3-états 33: DM74LS534 de la société FAIRCHILD
- registres 34: DM74LS374 de la société FAIRCHILD
- amplificateur de ligne 35: MAX232 de la société MAXIM

Dans cet exemple de réalisation, le microprocesseur utilisé ne comportant pas de port de communication série, un circuit d'interface de type "adaptateur de communication asynchrone" (ACIA) est mis en oeuvre (Circuit de référence MC6850 de la société MOTOROLA)

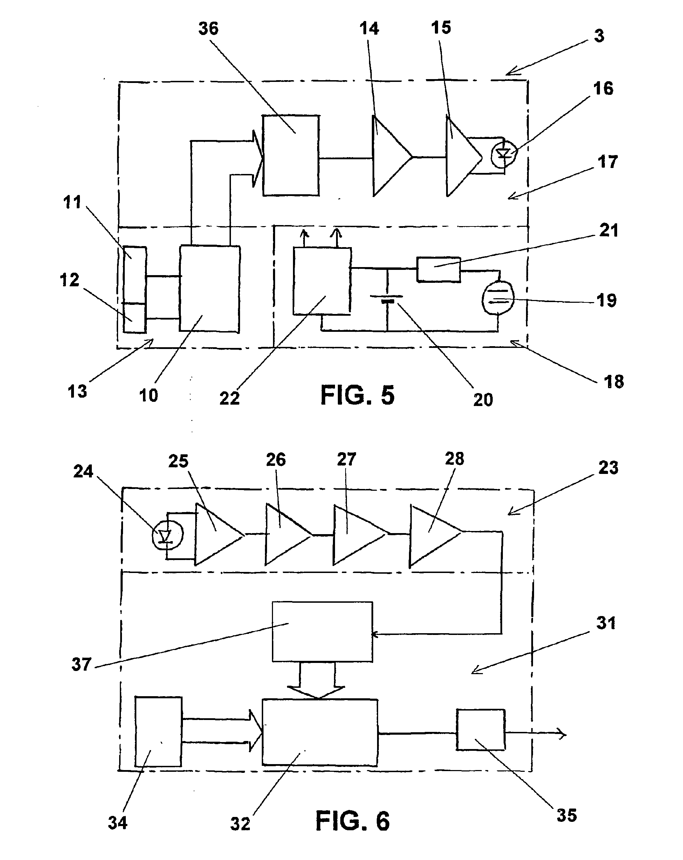

Dans un second mode de réalisation de l'électronique interne de chacun des dispositifs de pointage 3, la génération des sous porteuses P1,P2 est réalisée par une méthode entièrement numérique. Comme le montre la Figure 5, le bloc d'émission 3 est donc simplifié. Le microcontrôleur 10 comporte, en plus du programme chargé d'élaborer les signaux binaires représentatifs des déplacements et de l'état de la souris, un second programme constituant un oscillateur numérique. La puissance de calcul nécessaire est importante, évaluée à quelques dizaines de MIPS, mais la puissance d'alimentation est limitée. Un circuit de type "TMS320C54x" de la société TEXAS INSTRUMENTS a donc été choisi pour sa faible consommation (Tension d'alimentation 3.3 V; 0,54 mW/MIPS). L'algorithme est décrit dans les diverses notes d'applications publiées par cette société et ne sera pas repris ici. Les échantillons des sous-porteuses modulées sont transmis à un convertisseur numérique/analogique 36, puis appliqués aux mêmes éléments que dans le bloc d'émission 3 du premier mode de réalisation: filtre passe-bande 14, amplificateur 15, diode infrarouge 16.

Dans ce mode de réalisation, 64 sous-porteuses sont utilisées. La fréquence supérieure dépasse les 200 KHz. Le théorème d'échantillonnage de Shannon impose donc une fréquence d'échantillonnage de plus de 400 KHz. Compte tenu du problème posé par le bilan de l'alimentation électrique, le convertisseur 36 de type "AD7524" de la société ANALOG DEVICES a été sélectionné.

La Figure 6 montre aussi que le boîtier électronique est considérablement simplifié dans ce mode de réalisation, puisque la batterie de décodeurs de tonalités 30 a disparu. Les décodeurs 30 sont remplacés par un seul convertisseur analogique/numérique 37 qui place les échantillons des signaux détectés sur le bus de données du microprocesseur 32.

Pour les mêmes raisons que précédemment, ce convertisseur 37 est un convertisseur rapide. Le modèle qui convient est un circuit de type "AD7822" de la société ANALOG DEVICE, capable d'une cadence d'échantillonnage maximum de 2 Méch./s.

L'algorithme de Goertzel qui est utilisé pour extraire l'information spectrale du signal échantillonné est un cas particulier de calcul d'une transformée de Fourier discrète, et ne sera pas exposé en détails ici, dans la mesure où toutes les explications figurent dans la note technique "DTMF Tone Generation and Detection: An implementation Using the TMS320C54x" (Application Report; SPRA096A- May 2000), publiée par la société TEXAS INSTRUMENTS, déjà citée.

Selon les indications données dans ce document, le traitement des 64 voies échantillonnées à 500 KHz emploie une puissance de calcul voisine de 200 MIPS.

Ce deuxième mode de réalisation n'appelle pas d'autres commentaires particuliers, dans la mesure où l'essentiel des fonctions du boîtier électronique sont réalisées par des modules logiciels de bibliothèques existantes, qui ont été adaptés.

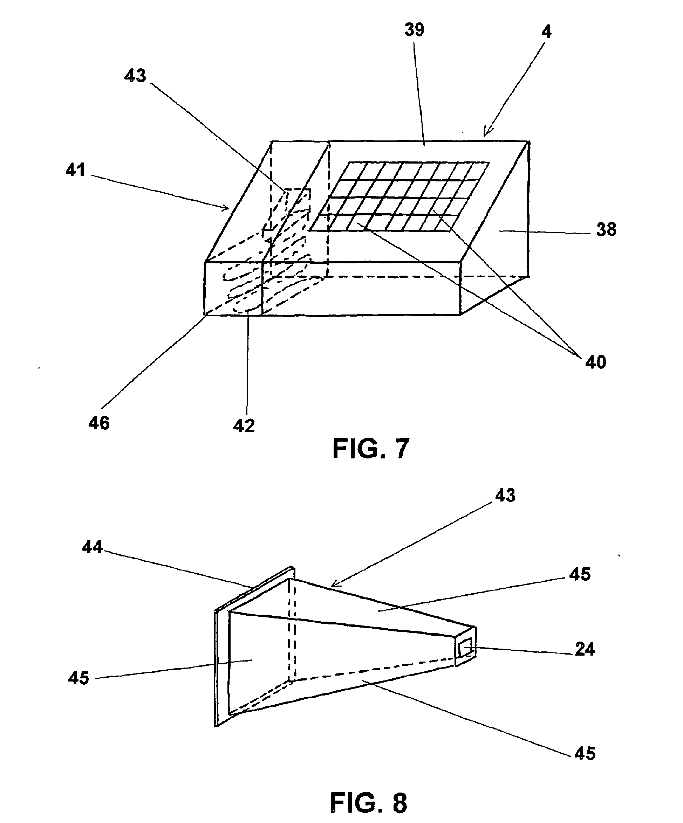

Le boîtier à l'intérieur duquel sont placés les éléments électroniques décrits ci-dessus, se présente extérieurement, comme le montre la Figure 7, sous la forme d'une console 38. La partie supérieure 39 présente un ensemble de 32 commutateurs 40 permettant de sélectionner un ou plusieurs dispositifs de pointage 3 et de rendre inopérants les autres. Les états de ces commutateurs 40 sont mémorisés dans les registres 34 lus par le microprocesseur 32. La console 38 comporte également un sélecteur du mode de fonctionnement du boîtier électronique 4. Trois modes de fonctionnement de base sont possibles:
- un premier mode de fonctionnement où une seule souris 3, sélectionnée par l'un des commutateurs 40, agit sur l'unité centrale 1.
- un deuxième mode de fonctionnement où toutes les souris agissent sur un même curseur 54
- un troisième mode de fonctionnement où chaque souris agit sur un curseur 54 qui lui est propre.

Le mode de fonctionnement de base choisi est aussi mémorisé dans un registre 34, et relu par le microprocesseur 32 qui lance le programme adéquat. Dans une variante des deuxième et troisième modes, les souris 3 qui agissent sur le ou les curseurs sont sélectionnées par les commutateurs 40.

Le boîtier électronique 4 comporte une partie distincte 41 de la console 38 comprenant l'ensemble du bloc de réception 23. Cette partie 41 est reliée par un câble blindé 42 à la console 38, en est généralement éloignée en opération, mais en est solidaire si les circonstances sont favorables. Elle comporte en effet une antenne cornet 43 destinée à collecter les faisceaux de lumière infrarouge émis par les souris 3. Le cornet collecteur 43 est placé en hauteur, et disposé de façon à couvrir toute la zone où sont utilisées les souris 3. Le câble 42 assure l'alimentation électrique du bloc de réception 23 et la transmission des signaux détectés vers la console 38. Comme le montre la Figure 8, l'antenne cornet 43 à la forme générale d'un tronc de pyramide à base carrée, formant un entonnoir. Un filtre rouge 44 est placé à l'entrée. Les parois intérieures 45 sont argentées et réfléchissent les rayons infrarouges captés vers la photodiode 24. Une antenne dont la base mesure 30 mm X 30 mm, la section au niveau de la photodiode 9 mm X 9 mm, et la hauteur est 60 mm a donné de bons résultats. Accessoirement, cette partie 41 qui contient le cornet 43 et le bloc de réception 23, et épouse la forme de la console 38 en la prolongeant quand elle en est solidaire, comprend un logement 46 pour loger le câble 42 replié.

Dans le premier mode de réalisation de chacun des dispositifs de pointage 3, un ensemble électronique de souris standard est utilisé de préférence. Cet ensemble électronique comprend généralement un circuit intégré spécialisé (Par exemple le contrôleur de souris série TP8375 de la société Topro Technology Inc.) au moyen duquel sont implémentées les fonctionnalités d'une souris standard comportant une boule et trois boutons-poussoirs.

Comme il le sera décrit plus loin, certaines applications utiliseront avec profit des boutons-poussoirs en nombre supérieur aux 2 ou 3 boutons classiques. Dans ce cas les signaux binaires commutant la sous-porteuse P1,P2 doivent contenir les séquences de données binaires représentatives de ces boutons supplémentaires. Ces séquences sont générées soit par une logique câblée spécifique, soit par un microcontrôleur, et insérées dans le flux pilotant la diode émettrice 16 par une porte OU dans les intervalles de temps où l'ensemble électronique standard ne transmet pas de données.

De la même façon des séquences de données binaires de signalisation du dispositif de pointage 3 peuvent être transmises périodiquement. Reçues normalement par le boîtier électronique d'interface 4 à intervalles de temps réguliers, la perte de la réception de ces séquences de signalisation signifie une anomalie du dispositif de pointage 3, une perturbation de la liaison par infrarouges, ou une dissimulation volontaire du dispositif de pointage 3 entraînant l'occultation de la diode émettrice 16.

Une liaison infrarouge présente donc un avantage par rapport à une liaison par ondes hertziennes, car un dispositif de pointage 3 ne peut pas être emporté en dehors du local où se trouve le boîtier électronique d'interface 4 sans que cela soit immédiatement détecté. Si la console 38 a été munie de voyants en regard de chacun des commutateurs 40, le clignotement du voyant correspondant permet de signaler le dispositif sur le point d'être volé. Cette fonction " antivol " est une caractéristique importante pour un dispositif dont l'usage est principalement collectif.

De même, dans un but similaire, des séquences de données binaires caractéristiques de l'intégrité de chacun des dispositifs de pointage 3 peuvent également être transmises. Le démontage non autorisé des différents éléments du dispositif de pointage 3( capot, batterie 20, boule...) est facilement détecté par des micro-interrupteurs, ou tout autre type de capteurs. Une modification de l'état des ces capteurs est transmise au boîtier électronique 4 et déclenche soit une alarme sur le boîtier 4 lui-même, soit une alerte sur le système informatique 1. Cette fonction « anti-démontage » est également importante pour une utilisation en public.

D'autres types d'alertes peuvent être déclenchées par chacun des dispositifs de pointage 3. Un bouton spécial manoeuvré par l'utilisateur d'un dispositif de pointage peut déclencher le clignotement du voyant correspondant sur la console 38, afin d'attirer l'attention. Pour faciliter la maintenance de chacun des dispositifs de pointage 3, des messages concernant leur fonctionnement peuvent être transmis, notamment l'état de charge de la batterie 20.

L'ensemble de ces fonctionnalités (antivol, anti-démontage, appel, aide à la maintenance) sont plus facilement implémentées dans le second mode de réalisation par logiciel. Cependant, toutes les combinaisons sont possibles entre les premier et second modes de réalisation décrits en détails ci-dessus.

Par exemple, non limitatif, dans le cas où l'élément standard de souris est basé non pas sur un circuit intégré spécifique, mais sur un microcontrôleur micro-programmé, le micro-code sera modifié en conséquence.

L'homme de métier pourra envisager de nombreuses autres façons de réaliser les fonctions de base de chacun des dispositifs de pointage 3 et du boîtier électronique d'interface 4.

Ainsi l'oscillateur 6 de génération de la sous-porteuse P1,P2 de chacun des dispositifs de pointage ne sera pas forcément stabilisé par un résonateur céramique 7, ou à quartz. Le circuit pourra être un circuit générateur d'impulsions à réseau RC externe, présentant une bonne stabilité en température et vis-à-vis des variations de la tension d'alimentation, comme par exemple un circuit intégré de type « timer ». Les harmoniques supérieures des signaux carrés produits ne seront pas nécessairement filtrées à l'émission, celles-ci étant de fait largement atténuées par la bande passante limitée de la photodiode réceptrice 24 et du bloc de réception 23. Il peut s'agir aussi d'un oscillateur contrôlé en tension (VCO), notamment si deux sous-porteuses P1,P2 sont utilisées. Ces simplifications interviennent si le nombre de dispositifs de pointage 3 nécessaires est inférieur à 32, par exemple 16, 8 ou 4, pour certaines applications.

Dans le premier mode de réalisation, les filtres passe-bande utilisés sont préférentiellement des décodeurs de tonalité très sélectifs, mais avec une plage de sensibilité relativement réduite. Des filtres actifs à fort coefficient de surtension, basés sur des amplificateurs opérationnels, peuvent être alternativement mis en oeuvre. En cas de rapport signal/ bruit défavorable, des boucles à verrouillage de phase pourront être choisies.

Le mode de liaison présentement décrit entre le boîtier électronique d'interface 4 et le système informatique 1 est une liaison série de type RS232. Ce mode de liaison est le plus répandu. Toutefois, l'homme de métier n'aura aucune difficulté à remplacer l'interface RS232 par une interface de type PS/2, ou même USB (Universal serial bus).

Ainsi qu'il a déjà été indiqué, le but de ce dispositif de commande d'un système informatique est d'offrir un nouveau moyen de formation collective aux techniques de la micro-informatique.

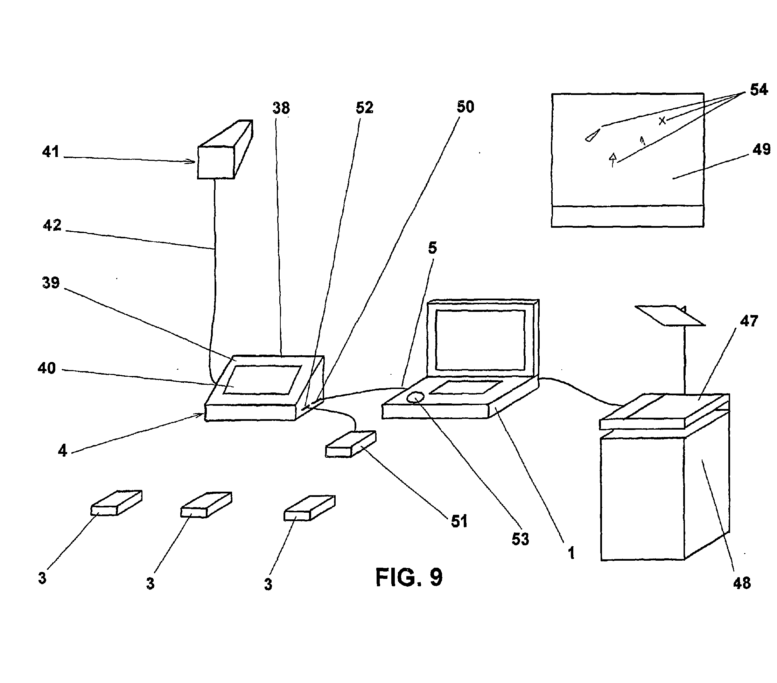

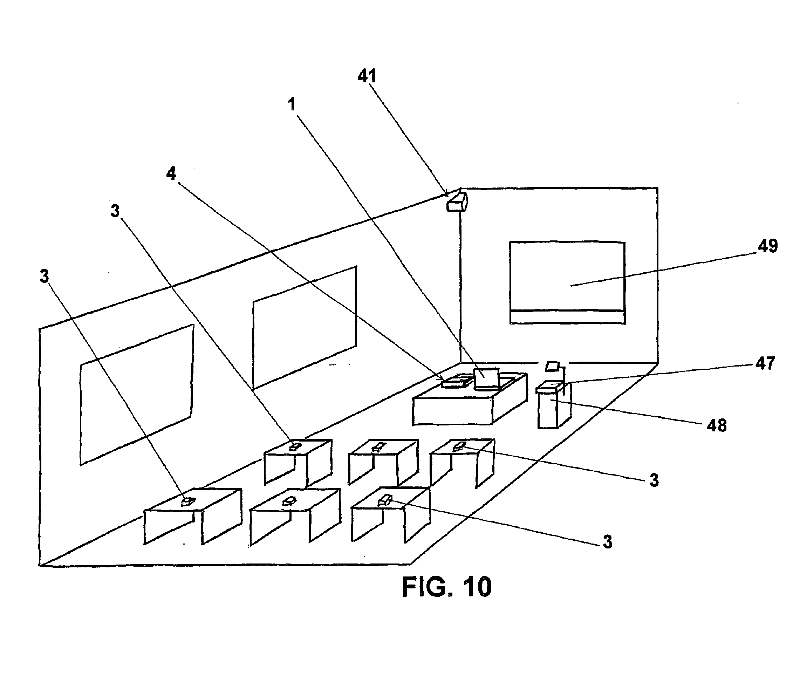

Un système informatique approprié utilisant le dispositif de commande selon l'invention est représenté sur les Figures 9 et 10, sans que cet exemple soit limitatif.

Ce système comprend:
- un ordinateur portable 1 sous WINDOWS ®
- une tablette LCD 47 connectée à la sortie vidéo de l'ordinateur 1
- un rétroprojecteur 48 de type couramment utilisé pour la projection de transparents
- un écran 49 sur lequel est projeté l'image de l'écran du micro-ordinateur 1

Le port de communication 50 du boîtier électronique 4 est relié au port "souris" 5 (Généralement COM1) du micro-ordinateur. Une souris supplémentaire 51 est connectée au port auxiliaire 52 du boîtier 4, si la boule 53 du micro-ordinateur 1 n'est pas utilisable. La partie 41 contenant le cornet de réception 43 est placée de façon à capter au mieux les signaux émis par les souris 3.

Une tablette LCD 47 présentant une résolution de 800 X 600 points (SVGA) utilisable avec un projecteur 48 de forte luminosité est préférable.

Sous le contrôle du formateur, les personnes manipulant les souris 3 apprennent à déplacer un curseur 54, et à utiliser les différents logiciels d'application installés sur le système 1.

Dans un environnement graphique, l'usage du clavier est assez limité; cependant le formateur a la possibilité d'afficher en bas de l'écran 49 l'image d'un clavier. La désignation de l'image d'une touche par un curseur simule la frappe correspondante. Ce résultat est obtenu au moyen d'un logiciel spécifique propre au système d'exploitation.

L'utilisation normale du dispositif de commande selon l'invention, semble être le premier mode de fonctionnement dans lequel chaque personne a successivement la possibilité d'agir sur un seul curseur 54, parce que cela correspond à la règle habituelle de prise de parole en groupe. Cependant des projets pédagogiques pourraient mettre à profit le troisième mode de fonctionnement du dispositif, où chaque personne dispose de son propre curseur 54, à condition que les logiciels d'applications s'y prêtent ou soient adaptés.

Pour ce faire, dans ce dernier mode de fonctionnement, le programme de communication du microprocesseur 32 incorpore dans les signaux binaires transmis à l'unité centrale 1 des séquences de données binaires d'identification des dispositifs de pointage émetteurs de ces signaux. Ces séquences sont traitées, dans la mesure où il n'y a pas d'incompatibilité avec le type de système d'exploitation sous lequel fonctionne l'unité centrale 1, par un logiciel de gestion de périphérique propre à l'interface 4 pour visualiser les curseurs affectés à chaque dispositif de pointage 3. Tous les curseurs 54, de forme et/ou de couleur différentes pour chaque dispositif de pointage 3 présent, peuvent apparaître simultanément à l'écran 49, ou bien seulement les curseurs 54 correspondants aux dispositifs 3 sélectionnés par la console 38.

Des logiciels utilisant les fonctionnalités spécifiques du dispositif de commande d'un système informatique objet de la présente invention pourront être développés par les éditeurs de logiciels éducatifs. Par exemple des logiciels permettant la passation collective de questionnaires à choix multiples (QCM). Pour un questionnaire à trois réponses possibles, un dispositif de pointage 3 muni seulement des trois boutons classiques suffit. Les questions s'affichent automatiquement pendant un temps donné sur l'écran 49 à la vue des élèves. Chacun de ceux-ci sélectionne sa réponse au moyen des boutons de la souris. Les résultats du QCM et les statistiques de la classe sont automatiquement calculés à la fin du test. Des QCM plus complexes mettront à profit les boutons-poussoirs supplémentaires des dispositifs de pointage 3.

Afin d'accroître la facilité de mise en oeuvre du dispositif de commande d'un système informatique 1 selon l'invention, et de retirer le maximum de bénéfices de son usage, celui-ci pourra être ajouté aux éléments du " chariot multimédia ", déjà en service dans certains établissements scolaires. Ce chariot, ou meuble spécial sur roulettes, supporte une unité centrale 1 de type PC, avec clavier, souris, lecteurs de CD-ROM ou DVD, hauts-parleurs, écran, imprimante. Il peut être déplacé de salle de classe en salle de classe, sans câblage spécial, selon les besoins, pour effectuer des démonstrations de logiciels. On conçoit aisément que le dispositif de commande d'un système informatique selon l'invention apportera une toute autre dimension au " chariot multimédia".

D'autres utilisations collectives du dispositif sont envisageables, notamment dans le domaine de la présentation commerciale. Ces présentations sont effectuées actuellement à l'aide de logiciels de type " Présentation assistée par ordinateur " (PréAO). Elles ne sont pas interactives, et le client ou prospect doit subir passivement les dires du représentant. Au moyen du dispositif selon l'invention, les clients peuvent orienter la présentation selon leurs souhaits en cliquant sur les liens renvoyant aux aspects du produit ou du service qui les intéressent. Sur ce principe des opérations promotionnelles pourraient être organisées dans les supermarchés.

Un vidéo-projecteur relié au système informatique comportant les souris sans fil multiples selon l'invention peut aussi créer une vitrine virtuelle : chaque client sélectionne le produit voulu au moyen du curseur correspondant au dispositif de pointage dont il s'est muni, et peut agrandir l'image du produit, ou bien obtenir d'autres informations, comme le prix ou la disponibilité. Un produit ne figurant pas dans la vitrine peut être appelé à partir de menus ou de listes. Plusieurs produits peuvent être visualisés simultanément par les clients. Chaque client peut éventuellement passer la commande de l'article qu'il a choisi, et récupérer ultérieurement cet article à la caisse à partir d'une référence de commande.

Les utilisations potentielles du dispositif de commande d'un système informatique selon l'invention sont donc multiples, et renouvellent complètement les applications collectives de la micro-informatique dans une perspective différente des applications en réseau et de groupes de travail existantes.

Elles ne sont pas liées à un environnement informatique particulier, notamment WINDOWS ® par exemple, mais sont ouvertes sur tout système d'exploitation présentant une interface graphique, comme par exemple LINUX muni de X-WINDOW.

Comme il va de soi, l'invention ne se limite pas aux seuls modes d'exécution ci-dessus, donnés à titre d'exemples; elle embrasse, au contraire, toutes les variantes possibles de réalisation. Notamment toutes celles résultant d'une optimisation du dispositif en vue d'une utilisation particulière, portant par exemple sur :
- le nombre de dispositifs de pointage, adapté au nombre maximal de participants prévisibles, qui a forcément une incidence sur la complexité du dispositif et donc sur son coût de fabrication.
- la portée adaptée à de petites salles, des locaux de taille moyenne ou des grandes salles, de congrès, amphithéâtres, hémicycles ou autres, qui implique des puissances d'émission différentes, éventuellement la mise en oeuvre de plusieurs diodes infrarouges en parallèle, ou en série, dans chaque dispositif de pointage.
- les conditions d'éclairage ambiant: notamment tubes fluorescents, ou soleil, en cas d'une utilisation en plein jour, à l'extérieur ou sous verrière.
- l'utilisation dans des lieux où une foule dense, de la fumée, de la vapeur d'eau, des flashes lumineux peuvent perturber les liaisons infrarouges (bars, discothèques, salles de spectacles...) ne sortiraient pas non plus du cadre nouveau et inventif de la présente invention.

## Revendications

1. Dispositif de commande d'un système informatique (1), préférentiellement de type "micro-ordinateur personnel", muni d'une interface graphique (2) et d'au moins un port de communication (5), par un groupe d'utilisateurs au moyen de plusieurs dispositifs de pointage (3) sans liaison filaire avec ledit système, préférentiellement de type "souris sans fil", chacun desdits dispositifs de pointage (3) étant manipulé par chacun desdits utilisateurs et transmettant au moyen d'un canal de communication des séquences de données binaires représentatives des déplacements et des états desdits dispositifs de pointage (3) à un boîtier électronique (4) d'interface connecté audit port (5), **caractérisé en ce que** ledit canal comporte une pluralité de sous-canaux de communication (C1,C2), transmettant avec une rapidité de modulation standard (R) lesdites séquences, constitués par une porteuse infrarouge commune et un ensemble de sous-porteuses (P1,P2) modulées en amplitude par les signaux binaires desdites séquences, de fréquences différentes pour chacun desdits dispositifs de pointage (3), sans harmonique commun, et réparties entre une fréquence inférieure (F1) et une fréquence supérieure (F2), avec des intervalles au moins égaux au double de la valeur de ladite rapidité de modulation (R) augmentée d'une bande de garde (B).

2. Dispositif de commande d'un système informatique (1) selon la revendication 1, **caractérisé en que** les fréquences desdites sous-porteuses (P1,P2) sont égales à des nombres premiers multipliés par un coefficient constant.

3. Dispositif de commande d'un système informatique (1) selon l'une quelconque des revendications 1 ou 2, **caractérisé en ce qu'**une seule sous-porteuse (P1) est affectée à chacun desdits dispositifs de pointage(3).

4. Dispositif de commande d'un système informatique (1) selon l'une quelconque des revendications 1 ou 2, **caractérisé en ce que** deux sous-porteuses modulées (P1,P2) en opposition de phase par lesdits signaux binaires sont affectées à chacun desdits dispositifs de pointage (3).

5. Dispositif de commande d'un système informatique (1) selon la revendication 3, **caractérisé en ce que** chacun desdits dispositifs de pointage (3) comporte:
a) un bloc de traitement numérique (13) des signaux comprenant préférentiellement un microcontrôleur (10) élaborant lesdits signaux binaires
b) un bloc d'émission (17) comprenant:
- un oscillateur (6), préférentiellement à résonateur céramique (7) interchangeable, accordé sur l'harmonique N de la fréquence de la sous-porteuse (P1) affectée audit dispositif de pointage (3)
- un diviseur de fréquence (8) par N produisant la sous-porteuse (P1) à partir de son harmonique
- un modulateur (9) de la sous-porteuse (P1) par lesdits signaux binaires produisant des signaux modulés
- un filtre passe-bande (14) de fréquence centrale égale à celle de ladite sous-porteuse (P1) et de bande passante égale audit intervalle diminué de ladite bande de garde, générant des signaux filtrés à partir desdits signaux modulés.
- un amplificateur (15) alimentant une ou plusieurs diodes (16) émettant un faisceau de lumière infrarouge à partir desdits signaux filtrés.
c) un bloc d'alimentation (18) comprenant:
- une cellule solaire (19)
- une batterie (20)
- un régulateur (21) de charge de la batterie (20) par la cellule solaire (19)
- un convertisseur DC/DC (22)

6. Dispositif de commande d'un système informatique (1) selon la revendication 4, **caractérisé en ce que** chacun desdits dispositifs de pointage (3) comporte:
a) un bloc de traitement numérique (13) des signaux comprenant préférentiellement un microcontrôleur (10) muni:
- d'un premier programme élaborant lesdits signaux binaires
- d'un second programme constituant un oscillateur digital élaborant les échantillons desdites sous-porteuses modulées.
b) un bloc d'émission (17) comprenant:
- un convertisseur numérique/analogique (36) de conversion desdits échantillons
- un filtre passe-bande (14) de fréquence centrale égale à celle de ladite sous-porteuse (P1,P2) et de bande passante égale audit intervalle diminué de ladite bande de garde, générant des signaux filtrés à partir desdits signaux modulés.
- un amplificateur (15) alimentant une ou plusieurs diodes (16) émettant un faisceau de lumière infrarouge à partir desdits signaux filtrés.
c) un bloc d'alimentation (18) comprenant:
- une cellule solaire (19)
- une batterie (20)
- un régulateur (21) de charge de la batterie (20) par la cellule solaire (19)
- un convertisseur DC/DC (22).

7. Dispositif de commande d'un système informatique (1) selon la revendication 5, **caractérisé en ce que** ledit boîtier électronique (4) comporte:
a) un bloc de réception (23) des signaux de lumière infrarouge et de détection desdites sous-porteuses.
b) un bloc de démultiplexage fréquentiel (29) des signaux détectés comprenant un nombre de filtres analogiques passe-bande (30) en nombre égal auxdits dispositifs de pointage (3).
c) un bloc de traitement numérique (31) des signaux comprenant préférentiellement un microprocesseur (32) muni d'un programme de communication élaborant lesdits signaux binaires à partir des signaux démultiplexés et les transmettant audit port (5) au moyen d'un amplificateur de ligne (35).

8. Dispositif de commande d'un système informatique (1) selon l'une quelconque des revendications 5 ou 6, **caractérisé en ce que** ledit boîtier électronique (4) comporte:
a) un bloc de réception (23) des signaux de lumière infrarouge et de détection desdites sous-porteuses (P1,P2).
b) un bloc de traitement numérique (31) des signaux comprenant:
- un convertisseur analogique/ numérique (37) des signaux détectés
- un microprocesseur (32) ou analogue muni d'un algorithme d'extraction de l'information spectrale desdits signaux détectés par "Transformation de Fourier Discrète", préférentiellement un filtre digital à deux pôles à réponse impulsionnelle infinie de type "Goertzel", et d'un programme de communication élaborant lesdits signaux binaires à partir de ladite information et les transmettant audit port (5) au moyen d'un amplificateur de ligne (35).

9. Dispositif de commande d'un système informatique (1) selon l'une quelconque des revendications 7 ou 8, **caractérisé en ce que** ledit amplificateur de ligne (35) est bidirectionnel et transmet audit microprocesseur (32) ou analogue des séquences de données binaires représentatives des déplacements d'un dispositif de pointage supplémentaire (51).

10. Dispositif de commande d'un système informatique (1) selon l'une quelconque des revendications précédentes, **caractérisé en ce que** ledit boîtier (4) comporte une partie distincte (41) comprenant ledit bloc de réception (17), munie d'un cornet collecteur (43) desdits faisceaux, et reliée par un câble blindé (42) à la partie principale (38) connectée audit port (5).

11. Dispositif de commande d'un système informatique (1) selon l'une quelconque des revendications précédentes, **caractérisé en ce que** ledit boîtier électronique (4) comporte une partie principale (38) en forme de console munie de commutateurs (40) permettant de sélectionner un ou plusieurs desdits dispositifs de pointage (3) et de rendre inopérants les autres.

12. Dispositif de commande d'un système informatique (1) selon l'une quelconque des revendications précédentes, **caractérisé en ce que** lesdits signaux binaires transmettent de plus périodiquement des séquences de données binaires de signalisation desdits dispositifs de pointage et **en ce qu'**une alarme est déclenchée quand l'une quelconque desdites séquences de données binaires de signalisation n'est plus reçue après un délai prédéterminé par ledit boîtier électronique (4).

13. Dispositif de commande d'un système informatique (1) selon l'une quelconque des revendications précédentes, **caractérisé en ce que** lesdits signaux binaires transmettent de plus des séquences de données binaires caractéristiques de l'intégrité de chacun desdits dispositifs de pointage (3), préférentiellement de la présence de la boule dans le type « souris sans fil ».

14. Dispositif de commande d'un système informatique (1) selon l'une quelconque des revendications précédentes, **caractérisé en ce que** chacun desdits dispositifs de pointage (3) comporte de plus des boutons-poussoirs en nombre au moins égal à 2, préférentiellement 7, dont les séquences de données binaires représentatives de leurs états sont incluses dans lesdits signaux binaires.

15. Utilisation du dispositif de commande d'un système informatique (1) selon l'une quelconque des revendications précédentes, **caractérisée en ce que** ledit système informatique (1) comporte:
- une unité centrale
- un périphérique d'affichage de type "tablette LCD" (47) adaptable à un rétroprojecteur (48), ou un vidéo-projecteur portable
- un ensemble de logiciels d'application de type « bureautique », de communication, ou spécifiques d'une fonction ou d'un métier
et **en ce que** ladite utilisation est l'initiation collective à la micro-informatique et la formation collective à l'usage desdits logiciels.

16. Utilisation du dispositif de commande d'un système informatique (1) selon l'une quelconque des revendications 1 à 14 précédentes, **caractérisée en ce que** ledit système informatique (1) comporte:
- une unité centrale
- un périphérique d'affichage de type "tablette LCD" (47) adaptable à un rétroprojecteur (48), ou un vidéo-projecteur portable
- un ensemble de logiciels d'application de type « présentation assistée par ordinateur » »
et **en ce que** ladite utilisation est la présentation commerciale permettant à un individu d'un groupe de clients de choisir un produit ou service au moyen desdits dispositifs de pointage (3), et de visualiser des informations sur ledit produit ou ledit service.

17. Utilisation du dispositif de commande d'un système informatique (1) selon la revendication 14 précédente, **caractérisée en ce que** ledit système informatique (1) comporte:
- une unité centrale
- un périphérique d'affichage de type "tablette LCD" (47) adaptable a un rétroprojecteur (48), ou un vidéo-projecteur portable
- un ensemble de logiciels d'application de type « enseignement assisté par ordinateur »
et **en ce que** ladite utilisation est la passation collective de questionnaires à choix multiples dont les réponses sont sélectionnées aux moyens desdits boutons-poussoirs desdits dispositifs de pointage (3).

18. Utilisation du dispositif de commande d'un système informatique (1) selon l'une quelconque des revendications 1 à 14 précédentes, **caractérisée en ce que** ledit système informatique (1), lesdits dispositifs de pointage (3), et ledit boîtier électronique (4) sont placés sur un chariot tenu à la disposition d'utilisateurs, formateurs, présentateurs ou enseignants, pour être emmenés et utilisés dans des locaux sans câblage électrique spécial.

19. Utilisation du dispositif de commande d'un système informatique (1) selon l'une quelconque des revendications 1 à 14 précédentes, **caractérisée en ce que** ledit système informatique (1) comporte de plus un logiciel de simulation d'un clavier permettant de simuler la frappe d'une touche en désignant l'image simulée de ladite touche au moyen de l'un desdits dispositifs de pointage.

20. Utilisation du dispositif de commande d'un système informatique (1) selon l'une quelconque des revendications 1 à 14 précédentes, **caractérisée en ce que** des séquences de données binaires d'identification desdits dispositifs de pointage (3) émetteurs sont inclues dans lesdits signaux binaires, et ledit système informatique (1) comporte de plus un logiciel attribuant un curseur (54) de forme et/ou de couleur différentes à chacun desdits dispositifs de pointage (3), selon lesdites séquences de données binaires d'identification reçues.

## Claims

1. Device for controlling a computer system (1), preferentially of the personal microcomputer type, provided with a graphic interface (2) and at least a communication port (5), by a user group by means of several pointing devices (3) without wired connection with said system, preferentially of the wireless mouse type, each one of said pointing devices (3) being handled by each one of said users and transmitting by means of a communication channel sequences of binary data representative of displacements and states of pointing devices (3) to an interface electronic box (4) connected to said port (5), **characterized in that** said channel comprises a plurality of secondary communication channels (C1, C2), transmitting with a standard modulation rate (R) said sequences, formed by a common infrared carrier and a set of subcarriers (P1, P2) modulated in amplitude by the binary digits of said sequences, with different frequencies for each one of said pointing devices (3), without common harmonic, and distributed between a lower frequency (F1) and a higher frequency (F2), with intervals at least equal to the double of the value of the said modulation rate (R) increased by a guard band (B).

2. Device for controlling a computer system (1) according to claim 1, **characterized in that** the frequencies of said subcarriers (P1, P2) are equal to prime numbers multiplied by a constant coefficient.

3. Device for controlling a computer system (1) according to any one of claims 1 or 2, **characterized in that** only one subcarrier (P1) is assigned to each one of said pointing devices (3).

4. Device for controlling a computer system (1) according to any one of claims 1 or 2, **characterized in that** two subcarriers modulated (P1, P2) in opposition of phase by said binary digits are assigned to each one of said pointing devices (3).

5. Device for controlling a computer system (1) according to claim 3, **characterized in that** each one of said pointing devices (3) comprises:
a) a block of digital processing (13) of the signals including preferentially a microcontroller (10) working out said binary digits,
b) a block of emission (17) including:
- an oscillator (6), preferentially with interchangeable ceramic resonator (7), tuned on harmonic N of the frequency of the subcarrier (P1) assigned to said pointing device (3),
- a frequency divider (8) by N producing the subcarrier (P1) starting from its harmonic,
- a modulator (9) of the subcarrier (P1) by said binary digits producing of the modulated signals,
- a band pass filter (14) with a center frequency equal to that of said subcarrier (P1) and a bandwidth equal to said interval decreased of said guard band, generating filtered signals starting from said modulated signals,
- an amplifier (15) feeding one or more diodes (16) emitting an infrared beam of light starting from said filtered signals,
c) a power supply unit (18) including:
- a solar cell (19),
- a battery (20),
- a regulator (21) of the load of the battery (20) by the solar cell (19),
- a DC/DC converter (22).

6. Device for controlling a computer system (1) according to claim 4, **characterized in that** each one of said pointing devices (3) comprises:
a) a block of digital processing (13) of the signals preferentially including a microcontroller (10) provided with:
- a first program working out said binary digits,
- a second program constituting a digital oscillator working out the samples of said modulated subcarriers,
b) a block of emission (17) including:
- a digital/ analog converter (36) for converting said samples,
- a band pass filter (14) with a center frequency equal to that of said subcarrier (P1, P2) and of bandwidth equal to the said interval decreased of said guard band, generating filtered signals from said modulated signals,
- an amplifier (15) feeding one or more diodes (16) emitting an infrared beam of light starting from said filtered signals,
c) a power supply unit (18) including:
- a solar cell (19),
- a battery (20),
- a regulator (21) of the load of the battery (20) by the solar cell (19),
- a converter DC/DC (22).

7. Device for controlling a computer system (1) according to claim 5, **characterized in that** said electronic box (4) comprises:
a) a block of reception (23) of the infrared light signals and of detection of said subcarriers,
b) a block of frequential demultiplexing (29) of the detected signals including a number of analog band pass filters (30) equal to the number of said pointing devices (3),
c) a block of digital processing (31) of the signals preferentially including a microprocessor (32) provided with a communication program working out said binary digits starting from the demultiplexed signals and transmitting them to the communication port (5) by means of a line amplifier (35).

8. Device for controlling a computer system (1) according to any one of claims 5 or 6, **characterized in that** said electronic box (4) comprises:
a) a block of reception (23) of the infrared light signals and of detection of said subcarriers (P1, P2),
b) a block of digital processing (31) of the signals including:
- an analog/digital converter (37) of the detected signals,
- a microprocessor (32) or similar provided with a Discrete Fourier Transform algorithm for extracting the spectral information of said detected signals, preferentially a two poles digital filter with infinite impulse response of Goertzel type, and a communication program working out said binary digits starting from said information and transmitting them to said port (5) by means of a line amplifier (35).

9. Device for controlling a computer system (1) according to any one of claims 7 or 8, **characterized in that** said line amplifier (35) is bidirectional and transmits to said microprocessor (32) or similar sequences of binary data representative of displacements of an additional pointing device (51).

10. Device for controlling a computer system (1) according to any one of the preceding claims, **characterized in that** said case (4) comprises a distinct part (41) including said block of reception (17), provided with a collecting horn (43) of said beams, and linked by a shielded cable (42) to the principal part (38) connected to said port (5).

11. Device for controlling a computer system (1) according to any one of the preceding claims, **characterized in that** said electronic box (4) comprises a principal part (38) in form of console provided with switches (40) making it possible to select one or more of said pointing devices (3) and to make inoperative the others.

12. Device for controlling a computer system (1) according to any one of the preceding claims, **characterized in that** said binary digits transmit moreover periodically sequences of binary data for signaling said pointing devices and **in that** an alarm is set off when any of said sequences of binary data for signaling is not received any more by said electronic box (4) after a predetermined amount of time.

13. Device for controlling a computer system (1) according to any one of the preceding claims, **characterized in that** said binary digits transmit moreover sequences of binary data characteristic of the integrity of each one of said pointing devices (3), preferentially of the presence of the ball in the wireless mouse type.

14. Device for controlling a computer system (1) according to any one of the preceding claims, **characterized in that** each one of said pointing devices (3) comprises moreover push-buttons in a number at least equal to 2, preferentially 7, whose sequences of binary data representative of their states are included in said binary digits.

15. Use of the device for controlling a computer system (1) according to any one of the preceding claims, **characterized in that** said information processing system (1) comprises:
- a central processing unit,
- a peripheral display of the LCD tablet type (47) adaptable to an overhead projector (48), or a portable video-projector,
- an application software set of the office automation or communication type, or specific of a function or a trade, and **in that** said use is collective initiation with microprocessing and collective training to the use of said software.

16. Use of the device for controlling a computer system (1) according to any preceding claims 1 to 14, **characterized in that** said information processing system (1) comprises:
- a central processing unit,
- a peripheral display of the LCD tablet (47) type adaptable to an overhead projector (48), or a portable video-projector,
- an application software set of the computer-assisted presentation type,
and **in that** said use is commercial presentation making it possible to an individual of a group of customers to choose a product or service by the means of said pointing devices (3), and to visualize information about said product or said service.

17. Use of the device for controlling a computer system (1) according to claim 14, **characterized in that** said information processing system (1) comprises:
- a central processing unit,
- a peripheral display of LCD tablet (47) type adaptable to an overhead projector (48), or a portable video-projector,
- an application software set of the computer-assisted learning type,
and **in that** said use is the collective taking of multiple-choice examinations the answers of which are selected by the means of said push-buttons of said pointing devices (3).

18. Use of the device for controlling a computer system (1) according to any preceding claims 1 to 14, **characterized in that** said computer system (1), said pointing devices (3), and said electronic box (4) are placed on a trolley held at the disposal of users, trainers, presenters or teachers, to be taken along and used in buildings without special electric wiring.

19. Use of the device for controlling a computer system (1) according to any preceding claims 1 to 14, **characterized in that** computer system (1) comprises moreover keyboard simulation software making it possible to simulate a keystroke by pointing the simulated image of said key by means of one of said pointing devices.

20. Use of the device for controlling a computer system (1) according to any preceding claims 1 to 14, **characterized in that** sequences of identification binary data are included in said binary digits for identifying said pointing devices (3) which are transmitting, and **in that** said computer system (1) comprises moreover software for allotting a cursor (54) of different form and/or color to each one of said pointing device (3), according to said sequences of identification binary data received.

## Patentansprüche

1. Steuervorrichtung eines EDV-Systems (1), bevorzugt vom Typ "PC", ausgerüstet mit einer graphischen Schnittstelle (2) und mit mindestens einem Kommunikationsport (5), durch eine Benutzergruppe mittels mehrerer Zeigereinheiten (3) ohne Kabelverbindung mit dem obengenannten System, vorzugsweise vom Typ "drahtlose Maus", wobei jede der besagten Zeigereinheiten (3) von jedem der obengenannten Benutzer gehandhabt wird und mittels eines Kommunikationskanals binäre Datenfolgen - die die Verlagerungen und die Zustände der obengenannten Zeigereinheiten (3) darstellen - an eine an den besagten Port (5) angeschlossene elektronische Schnittstelleneinheit (4) überträgt, **dadurch gekennzeichnet, dass** der obengenannte Kanal eine Mehrzahl an die besagten Datenfolgen mit einer Standardmodulationsgeschwindigkeit (R) übertragenden Kommunikationsunterkanälen (C1,C2) aufweist, welche aus einer gemeinsamen Infrarotträgemvelle und aus einer Einheit aus Unterträgern (P1,P2) bestehen, die durch die Binärsignale der besagten Datenfolgen amplitudenmoduliert werden, mit unterschiedlichen Frequenzen für jede der besagten Zeigereinheiten (3), ohne gemeinsame Harmonische, und aufgeteilt auf eine untere Frequenz (F1) und auf eine obere Frequenz (F2), mit Intervallen, die mindestens dem doppelten Wert der besagten Modulationsgeschwindigkeit (R) entsprechen, erhöht durch ein Sicherheitsband (B).

2. Steuervorrichtung eines EDV-Systems (1), nach Anspruch 1. **dadurch gekennzeichnet, dass** die Frequenzen der obengenannten Unterträger (P1, P2) Primzahlen entsprechen, welche mit einem konstanten Beiwert multipliziert sind.

3. Steuervorrichtung eines EDV-Systems (1), nach einem der Ansprüche 1 oder 2, **dadurch gekennzeichnet, dass** jeder der obengenannten Zeigereinheiten (3) ein einziger Unterträger (P1) zugeordnet ist.

4. Steuervorrichtung eines EDV-Systems (1), nach einem der Ansprüche 1 oder 2, **dadurch gekennzeichnet, dass** jeder besagten Zeigereinheit (3) zwei durch die obengenannten Binärsignale in Gegenphase modulierte Unterträger (P1,P2) zugeordnet sind.

5. Steuervorrichtung eines EDV-Systems (1), nach Anspruch 3, **dadurch gekennzeichnet, dass** jede obengenannte Zeigereinheit (3) aufweist:
a) einen digitalen Signalverarbeitungsblock (13), welcher bevorzugt einen Mikrocontroller (10) beinhaltet, der die besagten Binärsignale generiert
b) einen Sendeblock (17), beinhaltend:
- einen Oszillator (6), bevorzugt mit einem auswechselbaren keramischen Resonator (7), welcher auf die N-Harmonische der Frequenz des der besagten Zeigereinheit (3) zugeordneten Unterträgers (P1) abgestimmt ist
- einen N-Frequenzteiler (8), welcher den Unterträger (P1) von der Harmonischen aus generiert
- einen Modulator (9) des Unterträgers (P1) durch die besagten Binärsignale, welche modulierte Signale produzieren
- ein Bandpassfilter (14) mit einer Mittenfrequenz, die gleich derjenigen des besagten Unterträgers (P1) ist, und mit einer Bandbreite, die gleich dem reduzierten Intervall des obengenannten Sicherheitsbandes ist, welches auf der Grundlage der besagten modulierten Signale gefilterte Signale produziert.
- einen Verstärker (15), welcher eine oder mehrere Dioden (16) versorgt, die einen Infrarotlichtstrahl von den besagten gefilterten Signalen aus senden.
c) ein Stromversorgungsteil (18), beinhaltend:
- eine Solarzelle (19)
- eine Batterie (20)
- einen Laderegler (21) für die Batterie (20) durch die Solarzelle (19)
- einen DC/DC-Wandler (22).

6. Steuervorrichtung eines EDV-Systems (1), nach Anspruch 4, **dadurch gekennzeichnet, dass** jede der besagten Zeigereinheiten (3) aufweist:
a) einen digitalen Signalverarbeitungsblock (13), welcher bevorzugt einen Mikrocontroller (10) beinhaltet, ausgestattet mit:
- einem ersten Programm, welches die besagten Binärsignale generiert
- einem zweiten Programm, welches einen digitalen Oszillator bildet, der die Abtastwerte der besagten modulierten Unterträger ausarbeitet.
b) einen Sendeblock (17), beinhaltend:
- einen Digital-/Analogwandler (36) für die Umwandlung der besagten Abtastwerte
- ein Bandpassfilter (14) mit einer Mittenfrequenz, die gleich derjenigen des besagten Unterträgers (P1,P2) ist, und mit einer Bandbreite, die gleich dem reduzierten Intervall des obengenannten Sicherheitsbandes ist, welches auf der Grundlage der besagten modulierten Signale gefilterte Signale produziert.
- einen Verstärker (15), welcher eine oder mehrere Dioden (16) versorgt, die einen Infrarotlichtstrahl von den besagten gefilterten Signalen aus senden.
c) ein Stromversorgungsteil (18), beinhaltend:
- eine Solarzelle (19)
- eine Batterie (20)
- einen Laderegler (21) für die Batterie (20) durch die Solarzelle (19)
- einen DC/DC-Wandler (22).

7. Steuervorrichtung eines EDV-Systems (1), nach Anspruch 5, **dadurch gekennzeichnet, dass** die besagte elektronische Einheit (4) aufweist:
a) einen Empfangsblock (23) für die Infrarotlichtsignale und für die Erfassung der besagten Unterträger.
b) einen Frequenzentmuitipiexierungsbiock (29) für die erfassten Signale, beinhaltend eine bestimmte Anzahl an analogen Bandpassfiltern (30), die der Anzahl der besagten Zeigereinheiten (3) entspricht.
c) einen digitalen Signalverarbeitungsblock (31), welcher bevorzugt einen Mikroprozessor (32) beinhaltet, der ausgestattet ist mit einem Kommunikationsprogramm, das die Binärsignale von den demultiplexierten Signalen aus generiert und sie mittels eines Leitungsverstärkers (35) dem obengenannten Port (5) übermittelt.

8. Steuervorrichtung eines EDV-Systems (1), nach einem der Ansprüche 5 oder 6, **dadurch gekennzeichnet, dass** die besagte elektronische Einheit (4) aufweist:
a) einen Empfangsblock (23) für die Infrarotlichtsignale und für die Erfassung der besagten Unterträger (P1,P2).
b) einen digitalen Signalverarbeitungsblock (31), beinhaltend:
- einen Analog-Digital-Wandler (37) für die erfassten Signale
- einen Mikroprozessor (32) oder ein ähnliches Bauteil, ausgestattet mit einem Extraktionsalgorithmus für die spektrale Information der besagten Signale, die durch "diskrete Fourier-Transformation" erfasst worden sind, bevorzugt einen zweipoligen Digitalfilter mit unendlicher Impulsantwort des Typs "Goertzel", und mit einem Kommunikationsprogramm, welches die besagten Binärsignale auf der Grundlage der obengenannten Information generiert und sie mittels eines Leitungsverstärkers (35) dem obengenannten Port (5) übermittelt.

9. Steuervorrichtung eines EDV-Systems (1), nach einem der Ansprüche 7 oder 8, **dadurch gekennzeichnet, dass** der besagte Leitungsverstärker (35) bidirektional ist und dem besagten Mikroprozessor (32) oder einer anderen vergleichbaren Vorrichtung binäre Datenfolgen übermittelt, die die Verlagerungen einer zusätzlichen Zeigereinheit (51) darstellen.

10. Steuervorrichtung eines EDV-Systems (1), nach einem der vorhergehenden Ansprüche, **dadurch gekennzeichnet, dass** die besagte Einheit (4) eine gesonderten Teil (41) aufweist, welcher den besagten Empfangsblock (17) beinhaltet, mit einem Sammeltrichter (43) für die besagten Bündel versehen ist, und über ein geschirmtes Kabel (42) mit dem an den besagten Port (5) angeschlossenen Hauptteil (38) verbunden ist.

11. Steuervorrichtung eines EDV-Systems (1), nach einem der vorhergehenden Ansprüche, **dadurch gekennzeichnet, dass** die besagte elektronische Einheit (4) einen Hauptteil (38) in Form einer Konsole aufweist, welche mit Schaltern (40) versehen ist, die es ermöglichen, eine oder mehrere der besagten Zeigereinheiten (3) zu wählen und die anderen zu deaktivieren.

12. Steuervorrichtung eines EDV-Systems (1), nach einem der vorhergehenden Ansprüche, **dadurch gekennzeichnet, dass** die obengenannten Binärsignale zudem periodisch binäre Datenfolgen für die Signalisierung der besagten Zeigereinheiten übermitteln, und dass ein Alarm ausgelöst wird, wenn eine der obengenannten binären Signalisierungsdatenfolgen nach einer von der elektronischen Einheit (4) vorbestimmten Zeitdauer nicht mehr empfangen wird.

13. Steuervorrichtung eines EDV-Systems (1), nach einem der vorhergehenden Ansprüche, **dadurch gekennzeichnet, dass** die besagten Binärsignale zudem binäre Datenfolgen übermitteln, die bezeichnend für die Unversehrtheit einer jeden Zeigereinheit (3) sind, bevorzugt für die Anwesenheit der Kugel bei einer Maus des Typs "drahtlose Maus".

14. Steuervorrichtung eines EDV-Systems (1), nach einem der vorhergehenden Ansprüche, **dadurch gekennzeichnet, dass** jede der besagten Zeigereinheiten (3) zudem mindestens 2, vorzugsweise 7, Druckknöpfe aufweist, deren ihre Zustände anzeigenden binäre Datenfolgen in den besagten Binärsignalen enthalten sind.

15. Benutzung der Steuervorrichtung eines EDV-Systems (1), nach einem der vorhergehenden Ansprüche, **dadurch gekennzeichnet, dass** das besagte EDV-System (1) aufweist:
- eine Zentraleinheit
- ein peripheres Anzeigegerät vom Typ "LCD-Tablett" (47), welches an einen Overhead-Projektor (48) oder an einen tragbaren Videoprojektor angepasst werden kann
- ein Anwendungssoftwarepaket für das Büro, für die Kommunikation oder spezifisch für eine Funktion oder für einen Beruf
und dass die besagte Benutzung der gemeinschaftlichen Einführung in die Mikroinformatik sowie der gemeinschaftlichen Schulung für die Benutzung der besagten Software entspricht.

16. Benutzung der Steuervorrichtung eines EDV-Systems (1), nach einem der vorhergehenden Ansprüche 1 bis 14, **dadurch gekennzeichnet, dass** das besagte EDV-System (1)aufweist:
- eine Zentraleinheit
- ein peripheres Anzeigegerät vom Typ "LCD-Tablett" (47), welches an einen Overhead-Projektor (48) oder an einen tragbaren Videoprojektor angepasst werden kann
- ein Anwendungssoftwarepaket des Typs "computergestützte Vorstellung"
und dass die besagte Benutzung die kaufmännische Vorstellung ist, welche es einer einzelnen Person einer Kundengruppe ermöglicht, mittels der obengenannten Zeigereinheiten (3) ein Produkt oder einen Service zu wählen und Informationen bezüglich des besagten Produktes oder des besagten Service zur Anzeige zu bringen.

17. Benutzung der Steuervorrichtung eines EDV-Systems (1), nach dem vorhergehenden Anspruch 14, **dadurch gekennzeichnet, dass** das besagte EDV-System (1) aufweist:
- eine Zentraleinheit
- ein peripheres Anzeigegerät vom Typ "LCD-Tablett" (47), welches an einen Overhead-Projektor (48) oder an einen tragbaren Videoprojektor angepasst werden kann
- ein Anwendungssoftwarepaket des Typs "computergestützte Bildung"
und dass die besagte Benutzung die gemeinschaftliche Verteilung von Auswahlfragebögen ist, deren Antworten mittels der besagten Druckknöpfe der besagten Zeigereinheiten (3) gewählt werden.

18. Benutzung der Steuervorrichtung eines EDV-Systems (1), nach einem der vorhergehenden Ansprüche 1 bis 14, **dadurch gekennzeichnet, dass** das besagte EDV-System (1), die besagten Zeigereinheiten (3) und die besagte elektronische Einheit (4) auf einem Benutzern, Ausbildern, Vorführern oder Lehrern zur Verfügung stehenden Wagen gestellt werden; **dadurch** können sie, ohne spezielle elektrische Verkabelung, in Räume gebracht und dort benutzt werden.

19. Benutzung der Steuervorrichtung eines EDV-Systems (1), nach einem der vorhergehenden Ansprüche 1 bis 14, **dadurch gekennzeichnet, dass** das besagte EDV-System (1) zudem eine Tastatur-Simulationssoftware aufweist, welche die Simulation der Betätigung einer Taste ermöglicht, indem mittels einer der besagten Zeigereinheiten auf das simulierte Bild der besagten Taste gedeutet wird.

20. Benutzung der Steuervorrichtung eines EDV-Systems (1), nach einem der vorhergehenden Ansprüche 1 bis 14, **dadurch gekennzeichnet, dass** binäre Datenfolgen für die Identifizierung der besagten sendenden Zeigereinheiten (3) in die besagten Binärsignale aufgenommen werden; zudem weist das EDV-System (1) eine Software auf, die jeder der besagten Zeigereinheiten (3) einen Cursor (54) mit verschiedenen Formen bzw. Farben zuweist, und zwar gemäß den besagten empfangenen binären Datenfolgen für die Identifizierung.
